# EUROPEAN PATENT SPECIFICATION

(11) **EP 2 372 153 B1**
(45) Date of publication and mention of the grant of the patent: **29.07.2020**
(21) Application number: 10156818.6
(22) Date of filing: 17.03.2010
(51) Int. Cl.: F04B 27/08, F16D 27/00

(54) **Speed sensor**
Capteur de vitesse
Geschwindigkeitssensor

(43) Date of publication of application: 05.10.2011
(73) Proprietor: Valeo Compressor Europe, s.r.o., 39601 Humplec (CZ)
(72) Inventor: Domke, Daniel, 39601, Humpolec (CZ); Jebelli, Kamyar, 39601, Humpolec (CZ); Fiene, Andreas, 39601 Humpolec (CZ); Kucharski, Gregor, 396 01, Humpolec (CZ)
(74) Representative: Popp, Eugen

(56) References cited:
- EP-A1- 1 691 074
- EP-A2- 1 939 449
- US-A1- 2007 017 771

## Description

### BACKGROUND OF THE INVENTION

Compressors find use in a myriad of situations; for example, a compressor is present in the cooling system for kitchen appliances, in particular fridges, as well general air conditioning systems. One particular use of compressors which has increased greatly in the last few years, is for use in the air conditioning system of automobiles. In such a scenario, the compressor is typically a belt driven compressor, wherein the rotation of the motor in the automobile is used to drive the belt, which in turn is used to drive the compressor.

Typical belt driven compressors in automobiles are provided with a pulley for interacting with the belt. As will be described throughout the present application, it is intended that the compressor works for both a belt or chain driven drive system, and whilst the use of a belt will be described interfacing with a pulley, it is clear that this is equally appropriate for any drive system interfacing with the compressor. The pulley of the compressor is provided with a magnetic clutch, such that the rotation of the pulley can be transmitted through to the drive shaft of the compressor.

Magnetic clutch assemblies are well known in compressors, and typically comprise an electromagnet which is used to draw an armature plate, which is in turn connected via a hub to the drive shaft, into frictional engagement with the pulley, such that rotation of the pulley is transmitted via the armature plate through to the drive shaft. When the electromagnet is switched off, the armature plate is driven away from the rotating pulley, and rotation of the pulley does not lead to rotation of the drive shaft and thus the compressor is off.

It is desirable to be able to monitor the appropriate operation of the compressor, so as to avoid damage to either the drive system or the electromagnetic clutch assembly. In particular, monitoring the rotation of the drive shaft of the compressor and comparing this with the rotation of the motor of the automobile, gives a clear indication as to whether the compressor is being driven at the same rotational velocity as the motor, or whether a problem exists. In particular, if the drive shaft of the compressor seizes, this will stop the armature plate from rotating, and this can lead to slippage of the clutch with associated damage thereof, as well as slippage of the belt or chain on the pulley for the drive system. This is to be avoided if possible, and thus it is desirable to monitor the speed of rotation of the compressor in order to determine when a compressor seizure occurs.

One such system is known In JP 2007 024257, in which a plate is placed radially extending from the drive plate, such that with rotation of the drive plate the edge portion of the plate is brought into closer alignment with the casing of the compressor. Ensuring that the armature plate, hub, drive shaft and rotating plate are made of magnetic material, the system of this prior art utilises the magnetic field existing from the electromagnet through to the plate and into the casing of the compressor back to the electromagnet. By positioning a magnetic sensor in a location such that this change in magnetic field with the rotation of the plate, and thus the increase and decrease in magnetic flux at the sensor, can be measured, the system allows for a calculation of the rotation of the drive shaft in the compressor. This system is somewhat complex, and further requires the use of all magnetic parts in the compressor, such that a magnetic leakage current may be set up from the electromagnet through the drive shaft and plate. In this prior known system, it is also necessary for the magnetic field to change rapidly within magnetic parts of the compressor such that the change of flux may be measured. This can cause problems at high rotational speeds, as the material will tend to cause a delay in the change of the magnetic field passing through it, which can lead to a near permanent "on" reading being made as a result of the magnetic field never properly dissipating.

In order to simplify the system given in the prior art, as well to improve the accuracy thereof, it is desirable to have a system in which the magnetic leakage current from the electromagnetic is not used for determining the rotation of the drive shaft. This further decreases the complexity of incorporating such a sensor within the compressor, which is desirable from a manufacturing point of view.

US 2007/0017771 and EP 1 691 074 each provide compressors related to the preamble of claims 1 and 15.

### SUMMARY OF THE INVENTION

The present invention provides a compressor in accordance with independent claim 1, and a method for placing a rotation sensor according to claim 15. Further preferred embodiments are given in the dependent claims. Any discrepancies between the claims and the information in the following should be construed as the text providing related, explanatory disclosure. The claims alone provide the scope of the invention, the following provides description of the claimed features and explanation of advantages thereof.

The claimed invention can be better understood in view of the embodiments of a compressor described hereinafter. In general, the described embodiments describe preferred embodiments of the invention. The attentive reader will note, however, that some aspects of the described embodiments extend beyond the scope of the claims. To the respect that the described embodiments indeed extend beyond the scope of the claims, the described embodiments are to be considered supplementary background information and do not constitute definitions of the invention *per se.* This also holds for the subsequent "Brief Description of the Drawing" as well as the "Detailed Description."

In particular, the present disclosure relates to a compressor which is being driven by any known driving source which can transmit a rotational force onto a pulley of the compressor. The pulley may be a belt or chain driven pulley, or any other form of system in which the drive system causes the pulley to rotate. The rotation of the pulley is coupled to the drive shaft by means of a magnetic clutch, in particular where the magnetic clutch comprises an electromagnet in the pulley which will attract an armature plate connected to the drive shaft to cause a frictional engagement. When the electromagnet is switched on, the armature plate is in frictional contact with the pulley, such that rotation of the pulley leads to rotation of the drive shaft.

Preferably, the compressor is provided with a rotation sensor in the region of the drive shaft. The rotation sensor may be provided by a magnetic field sensor, such that this may measure a changing magnetic field in the region of the drive shaft. Providing magnetic portions on either the drive shaft or hub, or as an integral part thereof, allows that with rotation of the drive shaft, a changing magnetic field can be sensed by the rotation sensor. In order to improve the sensitivity of this system, it is preferable that the rotation sensor, in particular the magnetic field sensor, and also perhaps the magnetic portions, are provided in a region outside of a magnetic leakage path in the compressor.

It Is known that magnetic leakage paths exist within compressors as a result of the electromagnet. Typically, the magnetic leakage paths are confined within the magnetic materials of the compressor, usually the steel or iron parts thereof. Away from the magnetic material parts of the compressor, the magnetic leakage paths are significantly reduced, and the magnetic fields resulting therefrom are significantly lower. By positioning the rotation sensor and magnetic portions away from these magnetic leakage paths, the effect of the electromagnet on the sensor can be dramatically reduced if not completely removed.

It is preferable that the magnetic field sensor be located in a portion of the compressor near to the drive shaft, but in a region where the maximum magnetic field is below the sensitivity of the magnetic field sensor. In particular, by avoiding any magnetic leakage paths when positioning the magnetic sensor, the affect of the electromagnet on the magnetic sensor is drastically reduced or removed. Further, it was discovered that within the centre of a magnetic coil present in a compressor, the magnetic field is extremely low, even if one includes the effects of external magnetic fields. In particular, it is noted that many of the magnetic material parts of the compressor restrict the external magnetic fields, and leakage magnetic paths, to within these structures, thus effectively shielding certain areas within the compressor from magnetic fields.

A particularly choice location for the magnetic field sensor is in a radial direction between the drive shaft and the electromagnet. It is further advantageous if the magnetic field sensor is placed within a radial path from the drive shaft and the bearings of the compressor. As these portions will tend to be made from magnetic materials, locating the sensor in this region will typically avoid locating the sensor in a magnetic leakage path. This is particularly the case, If the shell nose of the compressor, which is the portion lying between the pulley and the drive shaft, is made from a non-magnetic material. Non-magnetic materials comprise a range of metals as well as most ceramics and plastics. If the shell nose is made from one of these material, a magnetic leakage path is not provided through the shell nose, and thus locating the magnetic sensor in this region will lead to this being outside of any magnetic leakage paths in the compressor.

The magnetic field sensor may be provided by a Hall Sensor. In particular, the Hall Sensor may be a so-called Hall Sensor switch, wherein when the Hall Sensor switch measures a magnetic field above a certain value, the output from the Hall Sensor switch is a maximum. When the measured magnetic field drops beneath this triggering value, the output of the Hall Sensor switch is a minimum. In other words, the Hall Sensor switch provides a logic 1 or 0 depending upon the measured magnetic field.

Numerous possibilities exist for generating or providing the magnetic portions on the hub or drive shaft. For example, the drive shaft may be structured with extensions which extend radially out from the drive shaft. A drive shaft is magnetised by means of the electromagnet, this will clearly lead to the extensions also being magnetised, which can then be used to change the magnetic field at the Hall Sensor with rotation of the drive shaft. That is, the air gap between the extensions and the Hall Sensor, or other magnetic field sensor, will change, and thus so will the magnetic field measured at the sensor.

If the drive shaft is not magnetised by means of the electromagnet, which may be achieved by providing the hub from a non-magnetic material, again such as known metals or ceramics or plastics, then the provision of extensions on the drive shaft will not lead to a significant change in the magnetic field. In such situations, it is possible to provide permanent magnets on the hub or drive shaft, such that rotation of the drive shaft and hub will lead to a change of the magnetic field. In this way, the change in magnetic field can be measured at the magnetic field sensor, and thus can be used to determine the rotational velocity of the drive shaft. One form of permanent magnet is the well known bar magnet, and one or more of these may be placed on the hub or drive shaft. It is also possible to provide the permanent magnet by means of a magnetic ring. Magnetic ring magnets are known, and comprise numerous north and south poles as one progresses in the circumferential direction of the magnetic ring. In this way, the magnetic field sensor will monitor the change of magnetic field from north to south and back again with rotation of the drive shaft, and thus the rotational velocity of the compressor can be determined.

In order to improve the sensitivity of the system, it is possible to locate a magnetic shielding material between the hub and/or drive shaft and the magnetic field sensor. If any stray magnetic field is present in this region, the use of a magnetic shield will stop or at least drastically attenuate the magnetic field passing from the hub or drive shaft to the magnetic field sensor, thus stopping any false readings at the magnetic field sensor. This is particularly advantageous if the system incorporates a permanent magnet or magnets, or a permanent magnetic ring magnet. In this case, it is possible to provide the magnetic shielding between the magnet and the drive shaft and/or hub, such that the magnetic field sensor only monitors and receives the magnetic field from the rotation of the permanent magnet, and not from any stray magnetic fields passing through the hub and drive shaft.

It is possible to provide the fixing means between the permanent magnet and the hub/drive shaft as a resin material. This resin material could be provided with a very high magnetic resistance which will then strongly attenuate the magnetic field passing therethrough, thus reducing this below the sensitivity of the magnetic field sensor, and thus avoiding any false reading. Even if a simple resin is chosen for the attachment, this will break the direct contact to the hub and avoid any magnetic current paths from passing through to the permanent magnet. A further advantage of the resin is that this can help reduce wear on the permanent magnet as a result of vibration within the compressor during use.

If the hub is to be provided by a magnetic material, it is advantageous that the hub does not extend into the region of the magnetic field sensor. By structuring the hub such that the hub does not overlap with the magnetic field sensor in the axial direction along the axis of the drive shaft, any magnetic field existing within the hub can be ignored and the accuracy of the sensor improved. That is, the magnetic hub is truncated, or the magnetic field sensor is so located, that the hub does not exist between the drive shaft and the magnetic field sensor. This avoids any effects of a magnetic field within the hub from affecting the reading at the sensor.

In general, it is most desirable to locate the rotation sensor, in particular the magnetic field sensor, in a region which is free from magnetic leakage currents or flux. In particular, a maximum magnetic flux will be generated in a compressor during use, and thus it is desirable that the magnetic field sensor is in a location where this maximum magnetic leakage flux is below the sensitivity of the sensor. In particular, in a region where the maximum magnetic leakage flux is 70% or lower than the switching value of the magnetic field sensor.

Finally, a method of determining the desired location of a rotation sensor in a compressor may be given. Once the compressor has been designed and fabricated, the user of the compressor may make readings of the magnetic field strength at a variety of locations near the drive shaft. In particular, the magnetic field which is being measured will be a combination of external magnetic fields as well as magnetic fields resulting from magnetic leakage paths from the electromagnet through the compressor. The method is designed such that the user monitors the magnetic fields throughout the compressor, and locates an area in which the maximum value of the magnetic fields will be below the switching sensitivity of the magnetic field sensor. Once such a region has been located, it is possible to position the magnetic field sensor in this region so as to improve the sensitivity of the reading.

### BRIEF DESCRIPTION OF THE DRAWING

- Figure 1:: This figure shows a cross sectional view of a compressor highlighting the key aspects of the rotation sensor of the present disclosure.
- Figure 2:: The cross sectional view of the compressor of Figure 1 showing possible magnetic current leakage paths, Ø₁, Ø₂ & Ø₃.
- Figure 3:: Front view of the compressor showing the location of the magnetic sensor in relation to a ring magnet.

### DETAILED DESCRIPTION

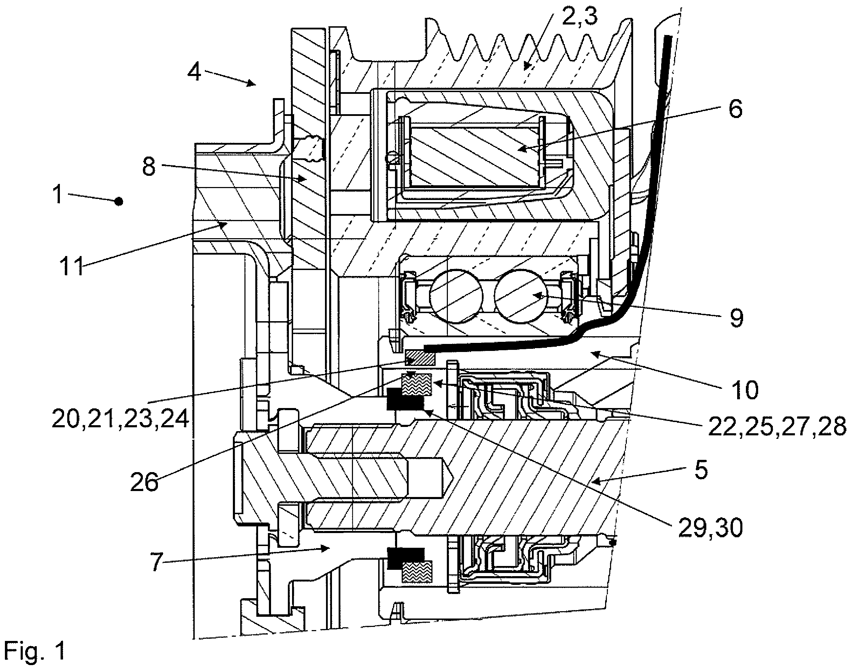

Figure 1 shows the front drive section for a compressor 1. In the Figure, the nose region of the compressor 1 is shown in cross section, wherein the drive shaft 5 of the compressor 1 generally shows the rotation axis of the compressor 1. The compressor 1 which is shown is that of a belt driven compressor 1, although this is purely by example. The particular compressor 1 shown in Figure 1 is provided with a rotatable pulley 2 which has a centre of rotation generally aligned with that of the drive shaft 5. This sort of compressor 1 is well known, and in particular is useful for transferring the rotational motion of the pulley 2 onto the drive shaft 5.

The compressor 1 shown in Figure 1 is by way of example only, and any other design of compressor 1 in which motion from an external source is provided onto the drive shaft 5 is also susceptible to the concepts of the present disclosure. Indeed, the present disclosure relates to a rotation sensor 20 for monitoring the rotation of the drive shaft 5. It is not necessary for the compressor 1 to be limited to that of the general discussion presented herein, and indeed the rotational sensor 20 will function equally well on any other form of compressor 1.

The particular design shown in Figure 1 for the compressor 1 is that of a compressor 1 comprising a magnetic clutch assembly 4. The magnetic clutch assembly 4 comprises a pulley 2 which is held on bearings 9 on the shell nose 10 of the compressor 1. The pulley 2 is rotatable on the bearings 9 around the shell nose 10, and in the example shown connects with the drive system 3 through the pulley 2. The drive system 3 may be a belt drive system, it may also be a chain drive system or any other known drive system which can cause the pulley 2 to rotate.

An electromagnet 6 is provided within the pulley 2, to form part of the magnetic clutch assembly 4. In particular, the electromagnet 6 is used to magnetically attract an armature plate 8 which is held by means of a hub 7, preferably, to the drive shaft 5. Rotation of the armature plate 8 leads to rotation of the drive shaft 5, in particular via the hub 7 if this is provided. In order to transfer rotation from the drive system 3 to the drive shaft 5, the magnetic clutch assembly 4 is activated. The specifics of this activation are that the electromagnet 6 is switched on, such that the armature plate 8 is attracted to the pulley 2 and a frictional engagement is achieved. With frictional engagement, slippage between rotation of the pulley 2 and armature plate 8 is reduced or removed, such that rotation of the pulley 2 will lead to rotation of the drive shaft 5. Whilst the electromagnet 6 is energised, the armature 8 and pulley 2 rotate as one, thus leading to driving of the drive shaft 5.

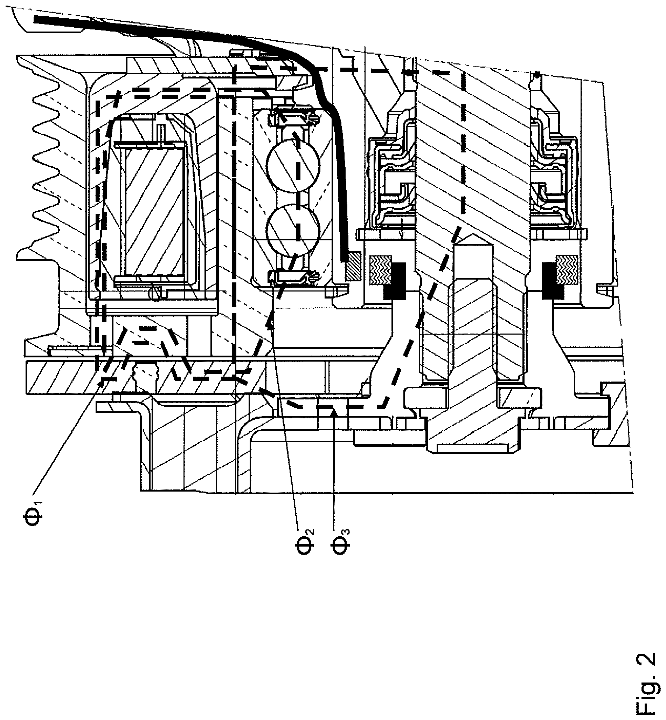

When the electromagnet 6 is not activated, a small gap will exist between the pulley 2 and an armature plate 8. The armature plate 8 is still supported by the hub 7 via an annual rubber damper 11. The annual rubber damper 11 is elastic, such that the armature plate 8 is movable along the longitudinal axis. When the electromagnet 6 is activated, a magnetic flux is generated which passes through elements of the compressor 1 as it attracts the armature plate 8. Some of these paths can be seen in Figure 2 as Ø₁, Ø₂ & Ø₃.

As has been discussed above, If the compressor 1 were to seize, this typically means that the drive shaft 5 also seizes. As is known in the art, seizure of the drive shaft 5 will lead to slippage either between the armature plate 8 and the pulley 2, or with the drive system 3 and the pulley 2. In either of these situations, damage can result to the compressor 1 and drive system 3, which is to be avoided if necessary. In order to avoid this, a rotational sensor 20 is advantageously located within the compressor 1, and the rotation of the drive shaft 5 can be monitored. If the rotation of the drive shaft 5 is monitored with the rotation of the drive system 3, a change or significant reduction in the rotation of the drive shaft 5 compared with the drive system 3 indicates that a fault has developed somewhere in the system. When such a fault is determined, it is possible to demagnetise the electromagnet 6 and disengage the clutch system, such that armature plate 8, pulley 2 and drive system 3 are not damaged.

The rotational sensor 20 of the present disclosure is shown in Figure 1 in a location near to the drive shaft 5 and hub 7. In particular, the rotational sensor 20 may be a magnetic field sensor 21, such that the magnetic field in the region of the drive shaft 5 can be monitored and measured. As is clear, if rotation of the drive shaft 5 would lead to a change in the magnetic field in the region of the magnetic field sensor 21, this change would be cyclical and would lead to a direct measurement of the rotation of the drive shaft 5. In particular, if a signal could be generated for a known rotation of the drive shaft 5, the system could immediately monitor the number of rotations of the drive shaft 5 per second, and thus the revolutions per minute.

As is known in the art, when an electromagnet 6 is placed within a compressor 1, a series of magnetic leakage paths or magnetic flux paths are generated through parts of the compressor 1. In particular, the compressor 1 is usually made from a magnetic material, such that a magnetic current or magnetic field will pass therethrough. As is also known in the art, a magnetic field will typically be guided and induced through the magnetic material parts of the compressor 1, to give a series of magnetic flux paths or magnetic leakage paths. Again, some of these magnetic flux paths may be seen in Figure 2 as Ø₁, Ø₂ & Ø₃.

It was discovered by the present Applicants that the region of the compressor 1 lying near to the drive shaft 5, and in particular between the drive shaft 5 and the electromagnet 6 in the pulley 2, is a region with an extremely low magnetic field. As has been discussed above, the sections of the compressor 1 which are comprised of magnetic material will tend to constrain the magnetic flux leakage paths within such material. It is not uncommon to provide the hub 7 and drive shaft 5 from steel or another magnetic material for reasons of strength, and thus the electromagnet 6 will induce a magnetic leakage path through the armature plate 8, hub 7 and drive shaft 5. By locating the rotational sensor 20, in particular a magnetic field sensor 21, away from this magnetic leakage path, the accuracy of the measurements taken by the magnetic field sensor 21 can be improved.

Looking at Figures 1 and 2, a second leakage path is known to exist in this sort of compressor 1, wherein this path passes from the electromagnet 6 through the bearings 9 and back to the electromagnet 6. Indeed, this magnetic leakage path through the bearings 9, when combined with the magnetic leakage path through the armature plate 8, hub 7 and drive shaft 5, leads to a region in the middle which is generally well shielded from magnetic leakage paths in the compressor 1. This has the additional advantage that the region lying between the drive shaft 5 and bearings 9 is also well shielded from external magnetic fields, as these magnetic parts tend to form a Farraday cage and so magnetic fields tend not to permeate through the pulley 2, electromagnet 6 and bearings 9 through to the region near the drive shaft 5.

This combination of magnetic shielding to external magnetic fields, as well as specific constriction of magnetic leakage paths away from the region highlighted as comprising a rotational sensor 20, has been measured by the present Applicant. Indeed, it has been shown that for a compressor 1 similar to that shown in Figure 1, when the electromagnet 6 is activated and attracting the armature plate 8, the magnetic field strength at the hub 7 can be around 30 mT. Further, in such a system the magnetic field strength at the surface of the shaft can be as high as 35 mT, as a result of the magnetic leakage path from the electromagnet 6 round through to the drive shaft 5. When, however, one measures the magnetic field strength at a region slightly removed from the drive shaft 5 and hub 7, one actually measures a magnetic field strength of between 0.1 and 1 mT. These measurements clearly show that the magnetic material parts of the compressor 1 are appropriately restraining any leakage magnetic flux and external magnetic fields, such that the magnetic field sensor 21 is located in a region with very low magnetic fields. As will be understood, if the magnetic field sensor 21 is in a region in which stray magnetic fields are extremely low, the magnetic field sensor 21 can be chosen to have a very high sensitivity to the measurable and desirably measured magnetic field, thus dramatically improving the sensitivity and accuracy of the rotational sensor 20.

The reduction in magnetic field within the shell nose 10 of the compressor 1 shown in Figure 1, can further be improved by making the shell nose 10 of the compressor 1 from a non-magnetic material. In the present disclosure, non-magnetic materials are unlimited in scope, and can refer to any of the non-magnetic metals, ceramics, plastics and the like. By structuring the shell nose 10 from a non-magnetic material, this ensures that substantially no magnetic leakage path will exist through the shell nose 10, and ensures that these will reside through the bearings 9 and drive shaft 5. In this manner, it is clear that the magnetic field sensor 21 can be positioned in a location which is outside of any magnetic leakage paths within the compressor 1.

As mentioned above, in order to monitor the rotation of the drive shaft 5, a magnetic portion 22 should be formed as a part of the hub 7 or drive shaft 5, or positioned thereon. In such a way, the magnetic field in the region of the magnetic field sensor 21 can then be adjusted and brought to a level which can be properly and accurately measured by the magnetic field sensor 21. As is clear from the above, the magnetic field sensor 21 is located in a region outside of the magnetic leakage paths within the compressor 1. Because of this, it is possible to provide a magnetic field sensor 21 which has a very high sensitivity, and is able to detect quite small magnetic fields. Given, however, that the maximum field strength as a result of external magnetic fields and magnetic leakage paths in this region are very low, the magnetic field sensor 21 can have a similarly low minimum sensitivity. By ensuring that the minimum sensitivity of the magnetic field sensor 21 lies above the maximum leakage flux or external magnetic field at the location of its installation, the magnetic field sensor 21 will only respond to a magnetic portion 22 positioned on the rotating drive shaft 5 or hub 7. Preferably, the magnetic field sensor 21 is in a location in which the maximum leakage magnetic flux is at most 70% of the switching value of the magnetic field sensor 21. Preferably It is at most 60%, or 50% or 40% or 30% or 20% or even 10% of the switching value of the magnetic field sensor 21. In such a way, the magnetic field sensor 21 will not be influenced by any aspects of the compressor 1 or external magnetic field, and thus will only be triggered by the magnetic portion 22 on the hub 7 or drive shaft 5.

In order to change the magnetic field in the region of the magnetic field sensor 21, it is possible to provide a permanent magnet on either the hub 7 or drive shaft 5. The permanent magnet 27 can be a single bar magnet which directs the magnetic field in the radial direction outward from the drive shaft 5, and which is generally aligned with the magnetic field sensor 21. As can be understood, rotation of the drive shaft 5 will lead to rotation of the permanent magnet 27 and thus with every complete revolution the permanent magnet 27 passes the magnetic field sensor 21 once, and a rotation of the drive shaft 5 can be monitored. Clearly, it is quite possible to provide a number of permanent magnets 27 distributed around the drive shaft 5 or hub 7 in the circumferential direction, such that the magnetic field sensor 21 monitors several permanent magnets passing the sensor 21, and thus can determine the rotational velocity of the drive shaft 5.

It is further possible to provide the permanent magnet or magnets 27 by means of a permanent magnet ring, or rings 28. Permanent magnetic rings are well known, and typically have a changing magnetic pole in the circumferential direction of the magnetic ring 28. Positioning such a magnetic ring 28 on either the drive shaft 5 or hub 7 in the region of the magnetic field sensor 21, will allow the magnetic field sensor 21 to monitor the changing magnetic poles as these rotate past the field sensor 21, and thus the rotation of the drive shaft 5 can be monitored. As is clear, the use of the permanent magnet will ensure that a high enough magnetic field can be generated by the magnet at the magnetic sensor 21, and thus the magnetic sensor 21 will be appropriately triggered. Additionally, having the permanent magnet(s) 27 on the drive shaft 5 or hub 7 will lead to the air gap 26 between the magnetic portions 22 and the magnetic field sensor 21 to change with rotation. This will also mean that the permanent magnet(s) 27 will be closer to the magnetic field sensor 21 than the hub 7 or drive shaft 5, which will allow for lower strength permanent magnets 27 to be used whilst still triggering the magnetic field sensor 21.

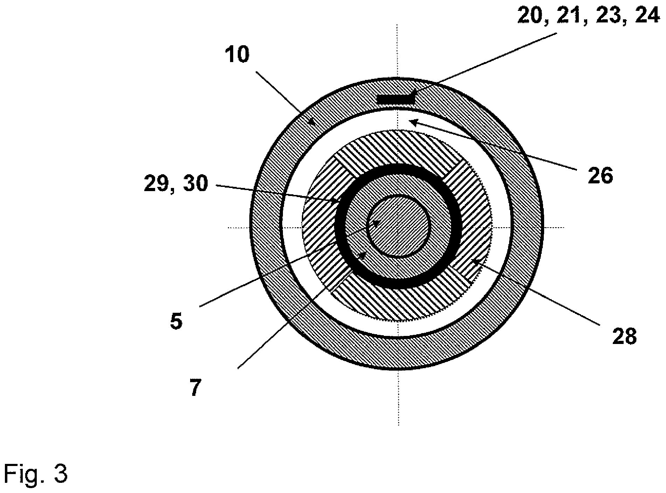

Looking at Figure 3, we see an end view of the compressor 1 shown in Figures 1 and 2. In particular, the shell nose 10 can be seen surrounding the drive shaft 5. The Figure further shows that a permanent magnet ring 28 is placed around the hub 7 of the compressor 1, and passes all the way around the hub 7 and drive shaft 5. The magnetic field sensor 20 is shown in Figure 3 in close proximity to the permanent magnetic ring 28, and is within the shell nose 10. Indeed, the magnetic field sensor 20 may advantageously be positioned within a groove within the outer surface of the shell nose 10.

To further improve the accuracy of the magnetic field sensor 21, it is possible to provide some form of magnetic shielding between the drive shaft 5 and hub 7 and the permanent magnet 27 or permanent magnet rings 28. By providing a material with a very low magnetic permeability, or very high magnetic resistivity, the magnetic fields generated by the hub 7 and drive shaft 5, as a result of magnetic leakage paths from the electromagnet 6, can be severely attenuated or indeed stopped. This use of a magnetic shielding means 30 will improve the accuracy of the magnetic field sensor 21, as it ensures that no extraneous or sudden very high leakage magnetic fields will pass through to the magnetic field sensor 21. One example of the shielding means 30 could be to use a resin material 29 for attachment of the permanent magnets 27 or permanent magnet rings 28. This resin 29 may be chosen to have a very high magnetic resistivity, thus ensuring that no leakage of magnetic field on the drive shaft 5 or hub 7 through to the magnetic field sensor 21 could occur.

It is also possible to simply provide a normal fixation resin 29 for fixing the permanent magnets 27 or permanent magnet rings 28 to the drive shaft 5 or hub 7. In this case the operation of the system is still improved, as the resin 29 will make a break between the permanent magnets 27 or permanent magnet rings 28 and the magnetic leakage flux through the drive shaft 5, thus reducing its influence on the measurements. Further, the resin provides mechanical improvements, as this will help to absorb vibration of the permanent magnets 27 or permanent magnet rings 28 with respect to the drive shaft 5, and thus improve the wear of the permanent magnets 27 or permanent magnet rings 28.

A further advantage of using one or more permanent magnets 27 or permanent magnet rings 28, is that the hub 7 may be made from a non-magnetic material. Again, this non-magnetic material could comprise a ceramic, one of the non-magnetic metals or even a plastic. By using such a non-magnetic material for the hub 7, there is no possibility of a magnetic leakage path being set up between the electromagnet 6, the armature plate 8 and the drive shaft 5. This non-magnetic hub 7 will ensure that this magnetic leakage path is broken, or at least cannot appropriately form, further reducing the possibility of stray magnetic fields in the region of the magnetic field sensor 21.

Another possibility is to ensure that the hub 7 is structured such that it does not extend along the drive shaft 5 as far as the magnetic field sensor 21. As will be clear from Figure 1, if the magnetic field sensor 21 is located in a region axially further away from the hub 7, the distance between the magnetic field sensor 21 and the drive shaft 5 will be greatly increased. This further improves the sensitivity of the rotational sensor 20, as it ensures that the gap between the drive shaft 5 and the rotational sensor 20 is rather large, and thus there is no chance of a stray magnetic field through the drive shaft 5 triggering the magnetic field sensor 21. In this way, false readings of rotation of the drive shaft 5 can be obviated. In this embodiment it may be advantageous to position the permanent magnets 27 or permanent magnet rings 28 at the end of the hub 27 in the axial direction of the drive shaft 5. This means that the permanent magnets 27 or magnet rings 28 will be the only aspects generating the magnetic field near the magnetic field sensor 21.

The magnetic field sensor 21 may be provided by a Hall Sensor 23. A Hall Sensor is well known for providing an accurate measurement of the magnetic field in the region of the sensor 23. Preferably, the Hall Sensor 23 may be provided by a Hall Sensor switch 24. A Hall Sensor switch 24 is a combined Hall Sensor 23 with a logic component attached thereto. When the Hall Sensor switch 24 detects a magnetic field is measured which is greater than a preset value, the Hall Sensor switch 24 produces a logic 1. When the measured magnetic field drops below this switching value, the Hall Sensor switch 24 produces a logic 0. In this way, the signals coming from the magnetic field sensor 21 are logic signals, and can thus be immediately monitored and a direct value for the rotational velocity of the drive shaft 5 determined.

As can be seen from the above, the present disclosure also relates to a method for choosing the location of the rotational sensor 20 within a compressor 1. By structuring the compressor 1 in a normal manner, the user of the compressor 1 can measure the magnetic field strengths at a variety of locations near the drive shaft 5 and hub 7. By finding a region within the compressor 1 with a very low stray magnetic field value, a magnetic field sensor 21 can be placed at this point and very accurate rotational measurements of the drive shaft 5 can be obtained. In particular, a region in the compressor 1 can be located in which the maximum leakage magnetic field is below the switching sensitivity of the chosen Hall Sensor 23 or Hall Sensor switch 24. In such a manner, a more sensitive magnetic field sensor 21 may be chosen and thus the sensitivity and accuracy of the rotational sensor 20 can be obtained.

Whilst features of the above disclosure may have been described in combination with other features, this is purely by way of example. The above disclosure should be considered as a variety of aspects of the compressor 1 and rotational sensor 20, which can be Interchanged and reconfigured as desired. The general concept underlying the present disclosure is that the location of a rotational sensor 20 can be optimised such that a very sensitive magnetic field sensor 21 can be employed in a region where magnetic fields are reduced or indeed not present, such that the magnetic field sensor 21 can accurately detect the passing of a magnetic portion 22 on either the hub 7 or drive shaft 5.

### REFERENCE NUMERAL LIST

- 1: Compressor
- 2: Pulley
- 3: Drive System
- 4: Magnetic Clutch Assembly
- 5: Drive Shaft
- 6: Electromagnet
- 7: Hub
- 8: Armature Plate
- 9: Bearings
- 10: Shell Nose
- 11: Annual Rubber Damper
- 20: Rotational Sensor
- 21: Magnetic Field Sensor
- 22: Magnetic Portion
- 23: Hall Sensor
- 24: Hall Sensor switch
- 25: Extensions
- 26: Air Gap
- 27: Permanent Magnets
- 28: Permanent Magnet Rings
- 29: Resin
- 30: Shielding Means

## Claims

1. A compressor (1), comprising a pulley (2) for connection to a drive system (3) and a magnetic clutch assembly (4) for connecting a drive shaft (5) to the pulley (2) such that the rotation of the pulley (2) is transferred to the drive shaft (5), wherein
the clutch arrangement (4) comprises an electromagnet (6), a hub (7) attached to the drive shaft (5) and an armature plate (8); and wherein the compressor (1) further comprises a rotation sensor (20),
wherein the rotation sensor (20) comprises a magnetic field sensor(21) **characterised in that**: the rotation sensor further comprises one or more magnetic portions (22) attached to, or forming part of, the drive shaft (5) or hub (7), and wherein at least the magnetic field sensor (21) is positioned outside of any magnetic leakage paths within the compressor (1) which are generated by the electromagnet (6) when energised.

2. The compressor (1) according to claim 1, wherein the magnetic field sensor (21) is located in a region of the compressor (1) in which the maximum magnetic field resulting from magnetic leakage paths through the compressor (1) or magnetic fields external to the compressor (1) is below the minimum sensitivity of the magnetic field sensor (21).

3. The compressor according to claim 2, wherein the magnetic field sensor (21) is located in a region of the compressor (1) which lies in the radial direction between the drive shaft (5) and the electromagnet (6) or in the radial direction between the drive shaft (5) and bearings (9) between the

4. The compressor (1) according to any one of the preceding claims, wherein the magnetic field sensor (21) is a Hall Sensor (23), or the magnetic field sensor (21) is a Hall Sensor switch (24) giving a TTL output, wherein when the Hall Sensor switch (24) detects a magnetic field above a switching value, the output from the Hall Sensor switch (24) is a logic 1, and when the Hall Sensor switch (24) detects a magnetic field below a switching value, or does not detect a magnetic field, the output from the Hall Sensor switch (24) is a logic 0.

5. The compressor (1) according to any one of the preceding claims, wherein the one or more magnetic portions (22) are provided by radially extending extensions (25) on either the hub (7) or the drive shaft (5) which reduce the air gap (26) between the magnetic field sensor (21) and the hub (7) or drive shaft (5), respectively.

6. The compressor (1) according to any one of the preceding claims, wherein the one or more magnetic portions (22) are provided by one or more permanent magnets (27) affixed to the hub (7) or drive shaft (5) in a region which is radially aligned with the magnetic field sensor (21).

7. The compressor (1) according to any one of the preceding clams, wherein the one or more magnetic portions (22) are provided by one or more permanent magnet rings (28) affixed to the hub (7) or drive shaft (5) in a region which is axially and/or radially aligned with the magnetic field sensor (21), wherein
the magnet rings (28) present alternating north and south magnetic poles in the circumferential direction of the magnet ring (28), such that the magnetic field sensor (21) can sense the change in the magnetic field from north to south to north etc. with rotation of the drive shaft (5).

8. The compressor (1) according to either of claims 6 or 7, wherein
the one or more permanent magnets (27), or permanent magnet rings (28), are held on the hub (7) or drive shaft (5) by means of a resin (29), wherein the resin (29) is made from a material which has a very low magnetic transparency or a very high magnetic resistance and thus strongly attenuates, or stops, any magnetic fields which pass there-through, thus magnetically isolating the one or more permanent magnets (27) or permanent magnet rings (28).

9. The compressor (1) according to either one of claims 6 or 7, wherein
the one or more permanent magnets (27) or permanent magnet rings (28) are located on the hub (7) or drive shaft (5) wherein between the one or more permanent magnets (27) or permanent magnet rings (28) and the hub (7) or drive shaft (5), there is provided a shielding means (30) which comprises a material which has a very low magnetic transparency or a very high magnetic resistance and thus strongly attenuates, or stops, any magnetic fields which pass there-through, thus magnetically isolating the one or more permanent magnets (27) or permanent magnet rings (28).

10. The compressor (1) according to any one of the preceding claims, wherein the hub (7) is made from a non-magnetic material, such as a ceramic, a plastic or aluminium.

11. The compressor (1) according to any one of the preceding claims, wherein the hub (7) is structured, and/or the magnetic field sensor (21) is positioned, such that no part of the hub (7) and the magnetic field sensor (21) overlap with each other in the axial direction of the drive shaft (5), and wherein
one or more permanent magnets (27) or permanent magnet rings (28) are located at the end of the hub (7) in the axial direction which is located furthest from the armature plate (8).

12. The compressor (1) according to any one of the preceding claims, wherein the compressor (1) comprises a shell nose (10) which is made from a non-magnetic material, such as a ceramic, a plastic or aluminium.

13. The compressor (1) according to any one of the preceding claims, wherein the magnetic field sensor (21) is in a location such that when one of the magnetic portions (22) is closest to the magnetic field sensor (21) the magnetic field in the region of the magnetic field sensor (21) is greater than the minimum sensitivity of the magnetic field sensor (21), and
when none of the magnetic portions (22) are at their closest position with respect to the magnetic field sensor (21), the magnetic field in the region of the magnetic field sensor (21) is lower than the minimum sensitivity of the magnetic field sensor (21).

14. The compressor (1) according to any one of the preceding claims, wherein the maximum leakage magnetic flux at the magnetic field sensor (21) is below the switching value of the magnetic field sensor (21), preferably at most 70% of the switching value of the magnetic field sensor (21),), preferably at most 50% of the switching value of the magnetic field sensor (21), further preferably 30% of the switching value of the magnetic field sensor (21), more preferably 10% of the switching value of the magnetic field sensor (21).

15. A method of locating a magnetic field sensor (21) within a compressor (1) comprising:
providing a compressor with a magnetic clutch assembly (4) comprising a pulley (2) and an armature plate (8),
providing a magnetic field sensor (21),
**characterised by**:
measuring the magnetic field strength within the compressor (1) in the region of the drive shaft (5) and/or hub (7), and locating the magnetic field sensor (21) in a region in which the maximum magnetic field from either or both of the magnetic leakage flux and external magnetic fields is below the minimum sensitivity of the magnetic field sensor (21), preferably
in a region which has a magnetic field which is below the switching value of the magnetic field sensor (21), preferably at most 70% of the switching value of the magnetic field sensor (21), preferably at most 50% of the switching value of the magnetic field sensor (21), further preferably 30% of the switching value of the magnetic field sensor (21), more preferably 10% of the switching value of the magnetic field sensor (21).

## Patentansprüche

1. Verdichter (1), umfassend eine Riemenscheibe (2) zur Verbindung mit einem Antriebssystem (3) und eine Magnetkupplungsanordnung (4) zum Verbinden einer Antriebswelle (5) mit der Riemenscheibe (2), so dass die Umdrehung der Riemenscheibe (2) auf die Antriebswelle (5) übertragen wird, wobei
die Kupplungsanordnung (4) einen Elektromagneten (6), eine an der Antriebswelle (5) befestigte Nabe (7) und eine Ankerplatte (8) umfasst; und wobei
der Verdichter (1) ferner einen Drehsensor (20) umfasst, wobei der Drehsensor (20) einen Magnetfeldsensor (21) umfasst,
**dadurch gekennzeichnet, dass**:
der Drehsensor ferner einen oder mehrere magnetische Abschnitte (22) aufweist, die an der Antriebswelle (5) oder Nabe (7) befestigt sind oder einen Teil davon bilden, und wobei zumindest der Magnetfeldsensor (21) außerhalb jeglicher magnetischer Streupfade innerhalb des Verdichters (1) positioniert ist, die durch den Elektromagneten (6) erzeugt werden, sobald er erregt wird.

2. Verdichter (1) nach Anspruch 1, wobei der Magnetfeldsensor (21) in einem Bereich des Verdichters (1) angeordnet ist, in dem das maximale Magnetfeld, das aus magnetischen Streupfaden durch den Verdichter (1) oder Magnetfeldern außerhalb des Verdichters (1) herrührt, unterhalb der minimalen Empfindlichkeit des Magnetfeldsensors (21) liegt.

3. Verdichter nach Anspruch 2, wobei der Magnetfeldsensor (21) in einem Bereich des Verdichters (1) angeordnet ist, der in radialer Richtung zwischen der Antriebswelle (5) und dem Elektromagneten (6) oder in radialer Richtung zwischen der Antriebswelle (5) und Lagern (9) zwischen der Riemenscheibe (2) und dem Verdichter (1) liegt.

4. Verdichter (1) nach einem der vorhergehenden Ansprüche, wobei der Magnetfeldsensor (21) ein Hallsensor (23) ist, oder der Magnetfeldsensor (21) ein Hallsensorschalter (24) ist, der eine TTL-Ausgabe ausgibt, wobei, wenn der Hallsensorschalter (24) ein Magnetfeld oberhalb eines Schaltwertes erfasst, die Ausgabe des Hallsensorschalters (24) logisch 1 ist, und, wenn der Hallsensorschalter (24) ein Magnetfeld unterhalb eines Schaltwertes erfasst oder kein Magnetfeld erfasst, die Ausgabe des Hallsensorschalters (24) logisch 0 ist.

5. Verdichter (1) nach einem der vorhergehenden Ansprüche, wobei der eine oder die mehreren magnetischen Abschnitte (22) durch sich radial erstreckende Verlängerungen (25) entweder an der Nabe (7) oder der Antriebswelle (5) bereitgestellt sind, die jeweils den Luftspalt (26) zwischen dem Magnetfeldsensor (21) und der Nabe (7) oder Antriebswelle (5) verringern.

6. Verdichter (1) nach einem der vorhergehenden Ansprüche, wobei der eine oder die mehreren magnetischen Abschnitte (22) durch einen oder mehrere Permanentmagneten (27) bereitgestellt werden, die an der Nabe (7) oder Antriebswelle (5) in einem Bereich befestigt sind, der radial zum Magnetfeldsensor (21) ausgerichtet ist.

7. Verdichter (1) nach einem der vorhergehenden Ansprüche, wobei der eine oder die mehreren magnetischen Abschnitte (22) durch einen oder mehrere Permanentmagnetringe (28) bereitgestellt werden, die an der Nabe (7) oder Antriebswelle (5) in einem Bereich befestigt sind, der axial und/oder radial zum Magnetfeldsensor (21) ausgerichtet ist, wobei die Magnetringe (28) abwechselnd Nord- und Süd-Magnetpole in der Umfangsrichtung des Magnetrings (28) aufzeigen, so dass der Magnetfeldsensor (21) die Änderung des Magnetfelds von Nord nach Süd nach Nord etc. bei Umdrehung der Antriebswelle (5) erfassen kann.

8. Verdichter (1) nach einem der Ansprüche 6 oder 7, wobei der eine oder die mehreren Permanentmagneten (27) oder Permanentmagnetringe (28) an der Nabe (7) oder Antriebswelle (5) mittels eines Kunstharzes (29) gehalten werden, wobei das Kunstharz (29) aus einem Material hergestellt ist, welches eine sehr geringe magnetische Durchlässigkeit oder einen sehr hohen magnetischen Widerstand aufweist und somit jegliche Magnetfelder, die durch dieses hindurchgehen, stark dämpft oder stoppt, wodurch der eine oder die mehreren Permanentmagneten (27) oder Permanentmagnetringe (28) magnetisch isoliert sind.

9. Verdichter (1) nach einem der Ansprüche 6 oder 7, wobei
der eine oder die mehreren Permanentmagneten (27) oder Permanentmagnetringe (28) auf der Nabe (7) oder Antriebswelle (5) angeordnet sind, wobei zwischen dem einen oder den mehreren Permanentmagneten (27) oder Permanentmagnetringen (28) und der Nabe (7) oder Antriebswelle (5) ein Abschirmelement (30) vorgesehen ist, das ein Material umfasst, das eine sehr geringe magnetische Durchlässigkeit oder einen sehr hohen magnetischen Widerstand aufweist und somit jegliche Magnetfelder, die durch dieses hindurchgehen, stark dämpft oder stoppt, wodurch der eine oder die mehreren Permanentmagneten (27) oder Permanentmagnetringe (28) magnetisch isoliert sind.

10. Verdichter (1) nach einem der vorhergehenden Ansprüche, wobei die Nabe (7) aus einem nicht-magnetischen Material, wie z.B. Keramik, Kunststoff oder Aluminium, hergestellt ist.

11. Verdichter (1) nach einem der vorhergehenden Ansprüche, wobei die Nabe (7) derart strukturiert ist und/oder der Magnetfeldsensor (21) derart positioniert ist, dass kein Teil der Nabe (7) und des Magnetfeldsensors (21) einander in axialer Richtung der Antriebswelle (5) überlappen, und wobei
ein oder mehrere Permanentmagnete (27) oder Permanentmagnetringe (28) in axialer Richtung am Ende der Nabe (7) angeordnet sind, das am weitesten von der Ankerplatte (8) entfernt ist.

12. Verdichter (1) nach einem der vorhergehenden Ansprüche, wobei der Verdichter (1) eine Mantelnase (10) aufweist, die aus einem nicht-magnetischen Material, wie z.B. Keramik, Kunststoff oder Aluminium, hergestellt ist.

13. Verdichter (1) nach einem der vorhergehenden Ansprüche, wobei sich der Magnetfeldsensor (21) an einer solchen Position befindet, dass, wenn einer der magnetischen Abschnitte (22) dem Magnetfeldsensor (21) am nächsten ist, das Magnetfeld im Bereich des Magnetfeldsensors (21) größer als die minimale Empfindlichkeit des Magnetfeldsensors (21) ist, und
wenn sich keiner der magnetischen Abschnitte (22) an seiner nächstgelegenen Position in Bezug auf den Magnetfeldsensor (21) befindet, das Magnetfeld im Bereich des Magnetfeldsensors (21) niedriger ist als die minimale Empfindlichkeit des Magnetfeldsensors (21).

14. Verdichter (1) nach einem der vorhergehenden Ansprüche, wobei der maximale magnetische Streufluß am Magnetfeldsensor (21) unterhalb des Schaltwertes des Magnetfeldsensors (21) liegt, vorzugsweise höchstens 70% des Schaltwertes des Magnetfeldsensors (21), vorzugsweise höchstens 50% des Schaltwertes des Magnetfeldsensors (21), ferner vorzugsweise 30% des Schaltwertes des Magnetfeldsensors (21), besonders bevorzugt 10% des Schaltwertes des Magnetfeldsensors (21).

15. Verfahren zum Lokalisieren eines Magnetfeldsensors (21) innerhalb eines Verdichters (1), umfassend:
Bereitstellen eines Verdichters mit einer Magnetkupplungsanordnung (4), welche eine Riemenscheibe (2) und eine Ankerplatte (8) umfasst,
Bereitstellen eines Magnetfeldsensors (21),
**gekennzeichnet durch**:
Messen der Magnetfeldstärke innerhalb des Verdichters (1) im Bereich der Antriebswelle (5) und/oder Nabe (7), und Anordnen des Magnetfeldsensors (21) in einem Bereich, in dem das maximale Magnetfeld durch magnetischen Streufluss und/oder externe Magnetfelder unterhalb der minimalen Empfindlichkeit des Magnetfeldsensors (21) liegt, vorzugsweise in einem Bereich, der ein Magnetfeld aufweist, das unterhalb des Schaltwertes des Magnetfeldsensors (21) liegt, vorzugsweise höchstens 70% des Schaltwertes des Magnetfeldsensors (21), vorzugsweise höchstens 50% des Schaltwertes des Magnetfeldsensors (21), ferner vorzugsweise 30% des Schaltwertes des Magnetfeldsensors (21), besonders bevorzugt 10% des Schaltwertes des Magnetfeldsensors (21).

## Revendications

1. Compresseur (1), comprenant une poulie (2) pour la liaison à un système d'entraînement (3) et un ensemble d'embrayage magnétique (4) pour relier un arbre d'entraînement (5) à la poulie (2) de telle sorte que la rotation de la poulie (2) soit transférée à l'arbre d'entraînement (5), dans lequel le dispositif d'embrayage (4) comprend un électroaimant (6), un moyeu (7) fixé à l'arbre d'entraînement (5) et une plaque d'induit (8), et dans lequel le compresseur (1) comprend en outre un capteur de rotation (20),
dans lequel le capteur de rotation (20) comprend un capteur de champ magnétique (21),
**caractérisé en ce que** :
le capteur de rotation comprend en outre une ou plusieurs parties magnétiques (22) fixées à l'arbre d'entraînement (5) ou au moyeu (7), ou en faisant partie, et dans lequel au moins le capteur de champ magnétique (21) est positionné à l'extérieur de toute ligne de fuite magnétique à l'intérieur du compresseur (1) qui est généré par l'électroaimant (6) lorsqu'il est excité.

2. Compresseur (1) selon la revendication 1, dans lequel le capteur de champ magnétique (21) est situé dans une région du compresseur (1) dans laquelle le champ magnétique maximal résultant de lignes de fuite magnétiques à travers le compresseur (1) ou de champs magnétiques externes au compresseur (1) est inférieur à la sensibilité minimale du capteur de champ magnétique (21).

3. Compresseur selon la revendication 2, dans lequel le capteur de champ magnétique (21) est situé dans une zone du compresseur (1) qui se trouve, dans la direction radiale, entre l'arbre d'entraînement (5) et l'électroaimant (6) ou, dans la direction radiale, entre l'arbre d'entraînement (5) et des paliers (9) entre la poulie (2) et le compresseur (1).

4. Compresseur (1) selon l'une quelconque des revendications précédentes, dans lequel le capteur de champ magnétique (21) est un capteur à effet Hall (23), ou le capteur de champ magnétique (21) est un commutateur de capteur à effet Hall (24) fournissant une sortie TTL, dans lequel, lorsque le commutateur de capteur à effet Hall (24) détecte un champ magnétique supérieur à une valeur de commutation, la sortie du commutateur de capteur à effet Hall (24) est un 1 logique et lorsque le commutateur de capteur à effet Hall (24) détecte un champ magnétique inférieur à une valeur de commutation, ou ne détecte pas de champ magnétique, la sortie du commutateur de capteur à effet Hall (24) est un 0 logique.

5. Compresseur (1) selon l'une quelconque des revendications précédentes, dans lequel lesdites une ou plusieurs parties magnétiques (22) sont fournies par des extensions (25) s'étendant radialement sur le moyeu (7) ou sur l'arbre d'entraînement (5), qui réduisent l'entrefer (26) entre le capteur de champ magnétique (21) et le moyeu (7) ou, respectivement, l'arbre d'entraînement (5).

6. Compresseur (1) selon l'une quelconque des revendications précédentes, dans lequel lesdites une ou plusieurs parties magnétiques (22) sont fournies par un ou plusieurs aimants permanents (27) fixés au moyeu (7) ou à l'arbre d'entraînement (5) dans une région qui est alignée radialement avec le capteur de champ magnétique (21).

7. Compresseur (1) selon l'une quelconque des revendications précédentes, dans lequel lesdites une ou plusieurs parties magnétiques (22) sont fournies par un ou plusieurs anneaux magnétiques permanents (28) fixés au moyeu (7) ou à l'arbre d'entraînement (5) dans une région qui est alignée axialement et/ou radialement avec le capteur de champ magnétique (21), dans lequel les anneaux magnétiques (28) présentent des pôles magnétiques nord et sud alternés dans la direction circonférentielle de l'anneau magnétique (28), de sorte que le capteur de champ magnétique (21) peut détecter la variation du champ magnétique de nord à sud à nord, etc., lors de la rotation de l'arbre d'entraînement (5).

8. Compresseur (1) selon l'une quelconque des revendications 6 ou 7, dans lequel lesdits un ou plusieurs aimants permanents (27) ou anneaux magnétiques permanents (28) sont maintenus sur le moyeu (7) ou l'arbre d'entraînement (5) au moyen d'une résine (29), dans lequel la résine (29) est constituée d'un matériau qui a une transparence magnétique très faible ou une résistance magnétique très élevée et qui atténue ainsi fortement, ou arrête, tout champ magnétique qui le traverse, isolant ainsi magnétiquement lesdits un ou plusieurs aimants permanents (27) ou anneaux magnétiques permanents (28).

9. Compresseur selon l'une quelconque des revendications 6 ou 7, dans lequel lesdits un ou plusieurs aimants permanents (27) ou anneaux magnétiques permanents (28) sont situés sur le moyeu (7) ou l'arbre d'entraînement (5), dans lequel, entre lesdits un ou plusieurs aimants permanents (27) ou anneaux magnétiques permanents (28) et le moyeu (7) ou l'arbre d'entraînement (5), il est prévu un moyen de blindage (30) qui comprend un matériau ayant une transparence magnétique très faible ou une résistance magnétique très élevée et qui atténue ainsi fortement, ou arrête, tout champ magnétique qui le traverse, isolant ainsi magnétiquement lesdits un ou plusieurs aimants permanents (27) ou anneaux magnétiques permanents (28).

10. Compresseur (1) selon l'une quelconque des revendications précédentes, dans lequel le moyeu (7) est constitué d'un matériau non magnétique, tel qu'une céramique, une matière plastique ou de l'aluminium.

11. Compresseur (1) selon l'une quelconque des revendications précédentes, dans lequel le moyeu (7) est structuré et/ou le capteur de champ magnétique (21) est positionné de telle sorte qu'aucune partie du moyeu (7) et du capteur de champ magnétique (21) ne se chevauche dans la direction axiale de l'arbre d'entraînement (5), et dans lequel
un ou plusieurs aimants permanents (27) ou anneaux magnétiques permanents (28) sont situés à l'extrémité du moyeu (7) qui est la plus éloignée de la plaque d'induit dans la direction axiale.

12. Compresseur (1) selon l'une quelconque des revendications précédentes, dans lequel le compresseur (1) comprend un nez de carter (10) qui est constitué d'un matériau non magnétique, tel qu'une céramique, une matière plastique ou de l'aluminium.

13. Compresseur (1) selon l'une quelconque des revendications précédentes, dans lequel le capteur de champ magnétique (21) est situé à un emplacement tel que, lorsqu'une des parties magnétiques (22) est la plus proche du capteur de champ magnétique (21), le champ magnétique dans la région du capteur de champ magnétique (21) est supérieur à la sensibilité minimale du capteur de champ magnétique (21), et
lorsqu'aucune des parties magnétiques (22) n'est à sa position la plus proche par rapport au capteur de champ magnétique (21), le champ magnétique dans la région du capteur de champ magnétique (21) est inférieur à la sensibilité minimale du capteur de champ magnétique (21).

14. Compresseur (1) selon l'une quelconque des revendications précédentes, dans lequel le flux magnétique de fuite maximal au niveau du capteur de champ magnétique (21) est inférieur à la valeur de commutation du capteur de champ magnétique (21), de préférence au maximum de 70 % de la valeur de commutation du capteur de champ magnétique (21), de préférence au maximum de 50 % de la valeur de commutation du capteur de champ magnétique (21), davantage de préférence de 30 % de la valeur de commutation du capteur de champ magnétique (21), encore plus préférentiellement de 10 % de la valeur de commutation du capteur de champ magnétique (21).

15. Procédé de positionnement d'un capteur de champ magnétique (21) à l'intérieur d'un compresseur (1), comprenant les étapes consistant à :
fournir un compresseur avec un ensemble d'embrayage magnétique (4) comprenant une poulie (2) et une plaque d'induit (8),
fournir un capteur de champ magnétique (21),
**caractérisé par** les étapes consistant à :
mesurer l'intensité de champ magnétique à l'intérieur du compresseur (1) dans la région de l'arbre d'entraînement (5) et/ou du moyeu (7), et positionner le capteur de champ magnétique (21) dans une région dans laquelle le champ magnétique maximal provenant de l'un ou l'autre du flux de fuite magnétique et de champs magnétiques externes, ou des deux, est inférieur à la sensibilité minimale du capteur de champ magnétique (21), de préférence dans une zone qui présente un champ magnétique inférieur à la valeur de commutation du capteur de champ magnétique (21), de préférence au maximum de 70 % de la valeur de commutation du capteur de champ magnétique (21), de préférence au maximum de 50 % de la valeur de commutation du capteur de champ magnétique (21), davantage de préférence de 30 % de la valeur de commutation du capteur de champ magnétique (21), encore plus préférentiellement de 10 % de la valeur de commutation du capteur de champ magnétique (21).
